Europäisches Patentamt

(19) European Patent Office

Office européen des brevets

(11) Publication number: **0 098 290**
**B1**

# (12) EUROPEAN PATENT SPECIFICATION

(45) Date of publication of the patent specification:
09.04.86

(51) Int. Cl.⁴: **G 06 K 13/067**

(21) Application number: 83900464.5

(22) Date of filing: 11.01.83

(86) International application number:
**PCT/US 83/00047**

(87) International publication number:
**WO 83/02513 (21.07.83 Gazette 83/17)**

(54) **APPARATUS FOR DETECTING THE PASSAGE OF MULTIPLE SUPERPOSED DOCUMENTS ALONG A FEED PATH.**

(30) Priority: 12.01.82 GB 8200793
02.09.82 US 414152

(43) Date of publication of application:
18.01.84 Bulletin 84/3

(45) Publication of the grant of the patent:
09.04.86 Bulletin 86/15

(84) Designated Contracting States:
**DE FR**

(56) References cited:
**DE - A - 2 137 269**

(73) Proprietor: NCR Corporation, World Headquarters,
Dayton, Ohio 45479 (US)

(72) Inventor: HAIN, David Alexander, 14A Adderley Terrace,
Monifieth Dundee DD 5 4DR (GB)

(74) Representative: Robinson, Robert George, International
Patent Department NCR Limited 206 Marylebone Road,
London NW1 6LY (GB)

LIBER, STOCKHOLM 1986

## Description

## Technical Field

This invention relates to an apparatus for detecting the passage of multiple superposed documents along a feed path, such an apparatus being often referred to as a double detect device.

## Backround Art

As the automatic transporting and processing of documents such as currency notes or checks has grown in recent years, the need has increased for a simple and reliable means requiring minimal adjustment for detecting when a document, such as a currency note in an automatic cash dispensing machine or a check in a check sorting machine, has become superposed on another, since such superpositioning may produce undesirable results such as the dispensing of an excessive amount of money from an automatic cash dispensing machine.

Various double detect devices have been proposed. For example, in operation of one known double detect device currency notes are fed between a pair of gauging rollers. In the event of multiple notes (or an excess thickness note) passing between the rollers, the axis of one of the rollers is displaced by an amount such that a note rejecting means is actuated, actuation of the rejecting means causing the notes or note to be diverted into a reject hopper. A double detect device is also known from DE-A-2 137 269 (Stadie) in which excess thickness is detected by the vertical deflection of one og a monolayer of balls overlying the sheets to be transported. These known devices have the disadvantage that they do not distinguish between superposed notes and a single note having a localized increase in thickness, brought about for example by a crease or fold in the note or by the attachment thereto of extraneous matter such as adhesive tape. As a result, there is a tendency for such known devices to reject an excessive number of notes, and the use of such devices in an automatic cash dispensing machine would tend to increase maintenance costs, since the rejection of an excessive number of notes would decrease the period of time between successive replenishments of the machine with currency notes.

## Disclosure of the Invention

It is an object of the present invention to provide a simple and reliable double detect device which can readily distinguish between two or more superposed documents and a single document having a localized increase in thickness.

According to the invention there is provided an apparatus for detecting the passage of multiple superposed documents along a feed path including an elongated housing; a stop means at one end of the housing; a movable actuating member at the other end of the housing; first and second superposed rows of substantially non-compressible elements retained in said elongated housing, the elements extending between said stop means at one end of the housing and said movable actuating member at the other end of the housing with each row of elements being in contact with the other row and with the centers of all the elements being spaced apart along the housing; roller means having a fixed axis of rotation and positioned in contact with, and extending along the length of, said first row of elements; means for urging said actuating member into engagement with the end element at said other end of said housing whereby the end element at said one end of said housing is urged against said stop means; means for feeding documents along said feed path between said roller means and said first row of elements in a direction transverse to the axis of said roller means whereby there is brought about a movement of said actuating member away from said stop means; and means for detecting a movement of said actuating member away from said stop means in excess of a predetermined amount.

## Brief Description of the Drawings

Embodiments of the invention will now be described by way of example with reference to the accompanying drawings, in which:

Fig. 1 is a side elevational view, shown partly broken away, of a double detect device in accordance with the invention for detecting the passage of multiple superposed currency notes along a feed path;

Fig. 2 is a sectional view taken along the line 2-2 of Fig. 1;

Fig. 3 is a schematic view of a currency note handling apparatus incorporating the double detect device of Figs. 1 and 2;

Figs. 4A-4D are schematic views of part of the double detect device, illustrating its manner of operation; and

Fig. 5 is a block diagram of an electrical circuit utilized with a modified version of the double detect device.

## Best Mode for Carrying Out the Invention

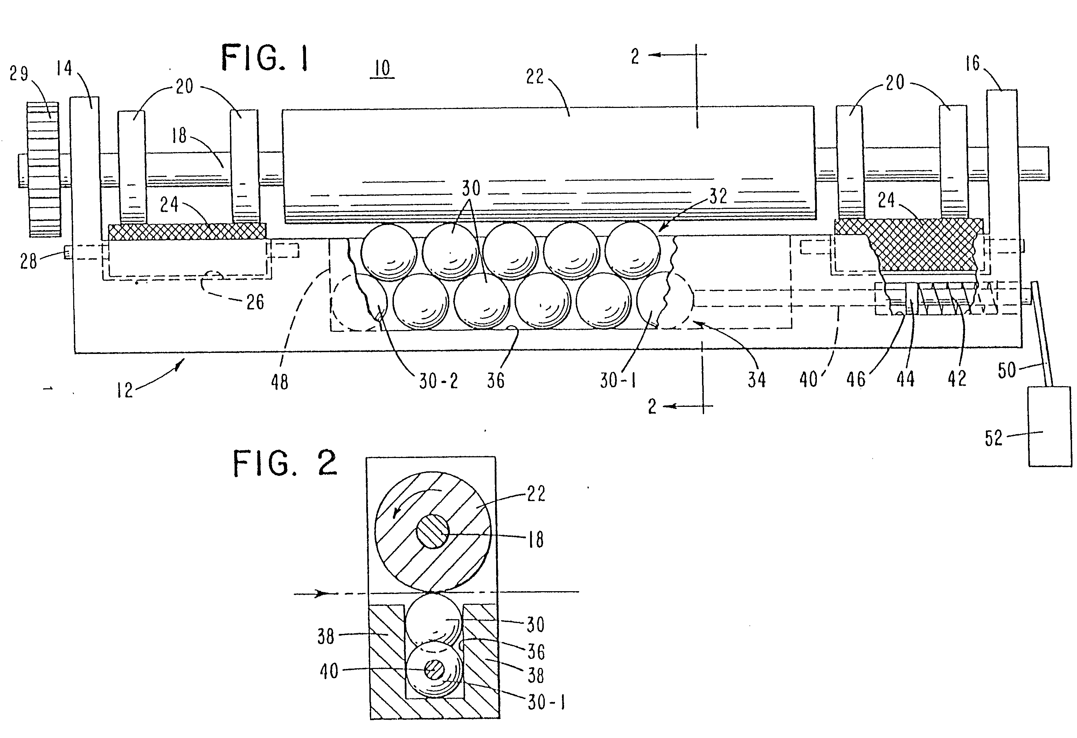

Referring to Figs. 1 and 2, the double detect device 10 shown therein includes an elongated metal block 12 having support portions 14 and 16 respectively provided at its ends. A shaft 18 is rotatably mounted on the support portions 14 and 16, the shaft 18 having secured to it two pairs of rubber feed rolls 20 and an elongated steel roller 22. Each pair of feed rolls 20 engages with a respective knurled roller 24 which is partially accommodated in a respective recess 26 formed in the block 12 and which is mounted on a respective shaft 28 rotatably mounted in the block 12. A gear wheel 29 is mounted on a part of the shaft 18 projecting beyond the support Portion 14, the gear wheel 29 being driven by drive means (not shown) so as to cause the shaft 18 to rotate continuously in operation. The rubber rolls 20 and the cooperating rollers 24 serve to feed currency notes through the device 10 in the direction indicated by the arrowed line in Fig. 2, the short edges of each note respectively passing over the rollers 24, with each short edge being gripped by one or both of the respective pair of rubber rolls 20 depending on the size of the note.

The device 10 incorporates a plurality ot identical smooth steel balls 30 which are arranged in first and second parallel rows 32 and 34 disposed one above the other. The balls 30 are retained in an elongated recess 36 formad in the block 12, the recess 36 extending parallel to the axis of the steel roller 22. Each of the balls 30 is an accurate sliding fit between the side walls 38 of the recess 36. The two rows 32 and 34 are parallel to the axis of the roller 22, the balls of the row 32 being in contact with the roller 22. Each ball of the row 32 is in engagement with an adjacent pair of balls of the row 34, as shown in Fig. 1, so that the centers of the balls 30 are spaced apart along the length of the recess 36. In the embodiment described, the first row 32 comprises five balls and the second row 34 comprises six balls, although it should be appreciated that different numbers of balls could be used.

The ball 30-1 at one end of the row 34 is engaged by one end of an actuating rod 40 slidably mounted in the block 12. The rod 40 is urged resiliently against the ball 30-1 by means of a compression spring 42 one end of which engages with a collar 44 formed on the rod 40 and the other end of which abuts against an end wall (not shown) of a cavity 46 in the block 12, along which cavity the collar 44 is slidably movable. The pressure exerted by the rod 40 on the ball 30-1 causes the ball 30-2 at that end of the row 34 remote from the rod 40 to be urged against the respective end wall 48 of the recess 36, and also causes the balls of the other row 32 to be urged against the roller 22; by virtue of this arrangement there is no play in the ball assembly. As shown in Fig. 1, there is a small gap between each adjacent pair of balls in the row 32 and between each adjacent pair of balls in the row 34; this is important in ensuring that all the balls of the row 32 are in contact with the roller 22.

That end of the rod 40 which is remote from the ball 30-1 projects outside the block 12 and engages with a switch arm 50 of an electrical switch 52.

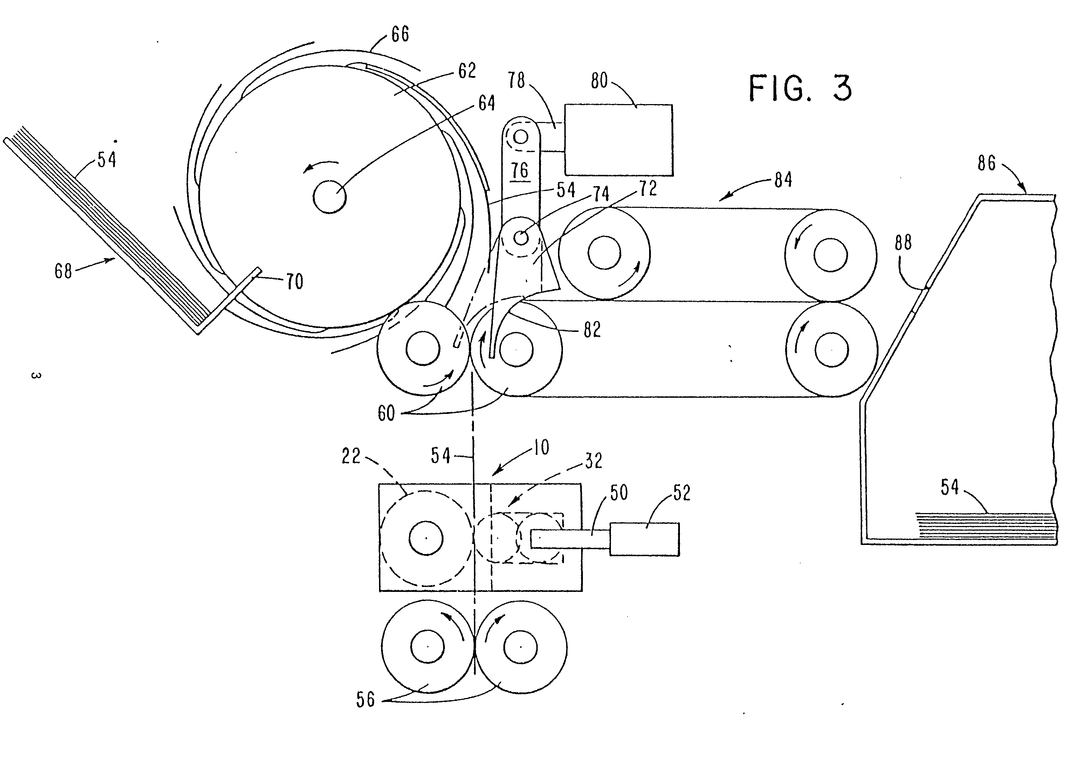

Referring now briefly to Fig. 3, the double detect device 10 is included in a currency note handling apparatus which may form part of an automatic cash dispensing machine. Currency notes 54 are arranged to be fed one by one from a dispenser module (not shown) by a feed system including a pair of cooperating feed rolls 56 which rotate in the senses indicated by the arrows in Fig. 3. The rolls 56 serve to feed the notes 54 to the double detect device 10, each note being gripped between two or more of the rubber rolls 20 and the cooperating rollers 24 of the device 10 and being fed thereby between the steel roller 22 and the first row 32 of balls.

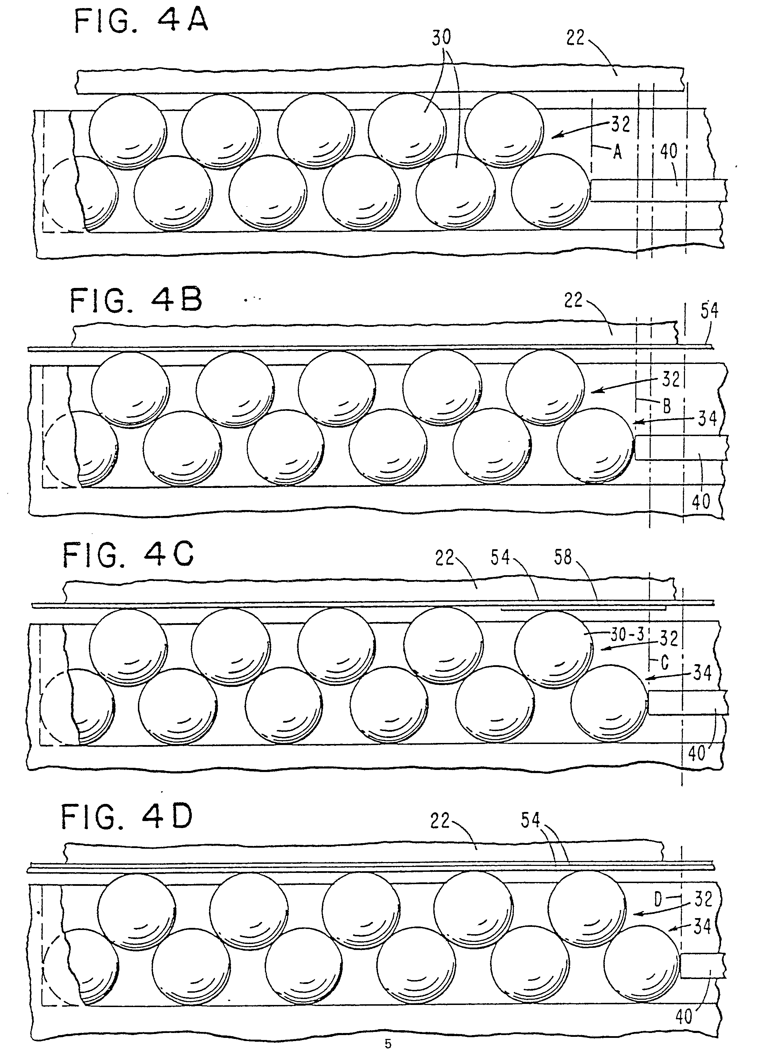

The operation of the double detect device 10 will now be described with additional reference to Figs. 4A-4D. Fig. 4A shows the position of the balls 30 and the actuating rod 40 when no currency note is present between the roller 22 and the first row 32 of balls. When a single note 54 is present between the roller 22 and the row 32, as shown in Fig. 4B, all the balls of the first row 32 are depressed by a distance equal to the thickness of the note. Each ball so depressed urges apart the adjacent pair of balls of the second row 34, and this urging apart of the balls of the row 34 has a cumulative effect in moving the adjacent end of the actuating rod 40 from the position A shown in Fig. 4A to the position B shown in Fig. 4B. If a currency note passing through the device 10 has a localized increase in thickness due, for example, to a crease or fold or to the attachment to it of a foreign body 58 such as a piece of adhesive tape, as shown in Fig. 4C, then where the increase in thickness occurs the adjacent ball 30-3 of the row 32 is depressed by an additional amount equal to this increase in thickness. This additional depression urges apart the adjacent pair of balls of the second row 34 by an additional amount and thereby causes the adjacent end of the rod 40 to be moved from position B to the position C shown in Fig. 4C. However, it will be appreciated that only one pair of balls of the second row 34 are urged apart by this additional amount and so the distance the rod 40 moves when moving from position B to position C is relatively small compared to the distance it moves when moving from position A to position B.

If two superposed notes 54 pass between the roller 22 and the row 32 as shown in Fig. 4D, then all the balls of the row 32 are depressed by a distance equal to the combined thickness of the superposed notes, and each depressed ball brings about an urging apart of the adjacent pair of balls of the row 34 by an increased distance compared with the distance this pair were urged apart for the situation shown in Fig. 4B. Again, the urging apart of all the adjacent pairs of balls of the row 34 has a cumulative effect in moving the adjacent end of the rod 40 from the position C to the position D shown in Fig. 4D. The switch 52 is so arranged that it is operated when the rod 40 is moved in excess of a predetermined amount, the predetermined amount corresponding to a position of the relevant end of the rod intermediate the position C shown in Fig. 4C and the position D shown in Fig. 4D. It will be appreciated therefore that only the presence of at least two superposed notes 54 (or a note of excess thickness equivalent to the combined thickness of at least two superposed notes) between the roller 22 and the row 32 of balls will bring about operation of the switch 52, the occurrence of a localized increase in thickness of a single note being ineffective to bring about operation of the switch 52.

Referring again to Fig. 3, after passing through the double detect apparatus 10 each currency note 54 is gripped by a further pair of feed rolls 60 and, assuming that the switch 52 is not operated, the note is fed to a stacking device which may take the form of a plurality of stacker wheels 62 mounted on, and spaced apart along, a drive shaft 64 which is arranged to be driven in operation in synchronism with the gear wheel 29 of the double detect device 10 in the sense indicated by the arrow in Fig. 3. The stacker wheels 62 are each provided with a plurality of arcuate fingers 66. Corresponding pairs of adjacent fingers 66 of the stacker wheels 62 are arranged to receive between them a currency note 54 fed from the feed rolls 60 and to transport it to a note receptacle 68 where the notes are formed into a bundle for subsequent transport by means not shown to a note delivery station of the cash dispensing machine. The receptacle 68 includes a comb-like support portion 70, each stacker wheel 62 being arranged to pass between adjacent teeth of the comb-like portion 70.

Associated with the pair of feed rolls 60 is a gate means comprising a plurality of pivotable guide members 72 mounted on a shaft 74. One end of an arm 76 is secured to the shaft 74, the other end of the arm 76 being pivotally coupled to an armature 78 associated with a solenoid 80. The solenoid 80 is arranged to be energized in response to operation of the switch 52. The arrangement is such that with the solenoid 80 in a non-energized condition the guide members 72 are in the position shown in solid outline in Fig. 3, out of the feed path of the currency notes 54. Upon the switch 52 being operated in response to the passage through the double detect device 10 of multiple superposed notes, the solenoid 80 is energized so as to retract the armature 78 and thereby bring about pivotal movement of the guide members 72 via the arm 76 and the shaft 74. This pivotal movement brings the guide members 72 into the position shown in dotted outline in Fig. 3 in which they are positioned in the feed path of the multiple notes detected by the double detect device 10. Curved guide surfaces 82 of the guide members 72 serve to guide the multiple notes to a belt transport device 84 which feeds the notes to a reject bin 86, the notes being deposited into the bin 86 through a slot 88.

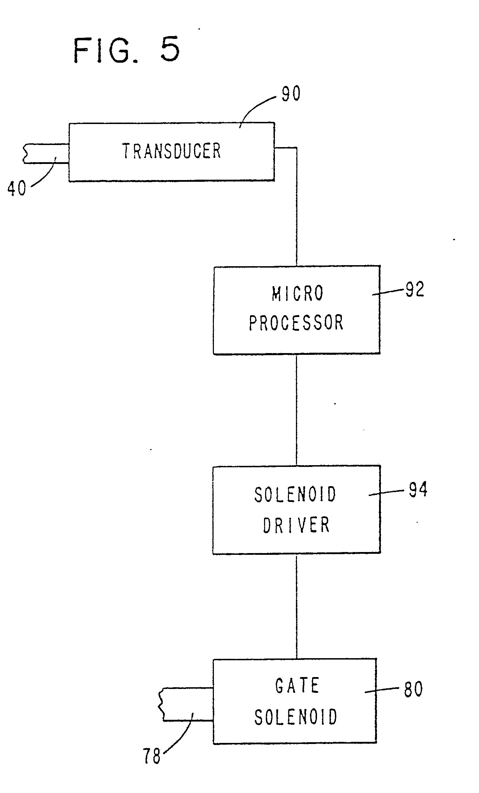

Referring to Fig. 5, in a modification of the double detect device described above the switch 52 is replaced by a displacement transducer 90 arranged to produce an analog output signal which is dependent upon the amount of movement of the actuating rod 40 brought about by the passage of a single note or multiple notes through the double detect device 10. The output of the transducer 90 is connected to the solenoid 80 via a microprocessor 92 and a solenoid driver 94. The microprocessor 92 has stored in it information relating to the signal produced by the transducer 90 in response to a note of known standard thickness passing through the double detect device 10, and the microprocessor 92 can thereby determine what output signal from the transducer is representative of the passage of multiple superposed notes through the double detect device 10 (corresponding to movement of the actuating rod 40 away from the end wall 48 in excess of a predetermined amount). When the microprocessor 92 detects the presence of multiple notes (or an excess thickness note of equivalent thickness) between the roller 22 and the row of balls 32, it causes the driver 94 to energize the solenoid 80. The use of a transducer has the advantage that it provides a particularly reliable means of sensing the passage of multiple superposed notes through the double detect device.

It will be appreciated that the double detect device described above is a mechanism of simple construction which can readily distinguish between two or more superposed notes and a single note having only a localized increase in thickness, by virtue of the fact that it senses the thickness of a plurality of locations spaced apart across the note. Also, the double detect device has the additional advantage that it provides a convenient means of magnifying the difference in thickness between a single note and multiple superposed notes passing through the device.

While the forms of the invention shown and described herein are admirably adapted to fulfill the objects primarily stated, it is to be understood that it is not intended to confine the invention to the forms or embodiments disclosed herein, for it is susceptible of embodiment in various other forms within the scope of the appended claims.

**Claims:**

1. An apparatus for detecting the passage of multiple superposed documents (54) along a feed path, including an elongated housing (12); a stop means (48) at one end of the housing; a movable actuating member (40) at the other end of the housing; first (32) and second (34) superposed rows of substantially non-compressible elements (30) retained in said elongated housing (12), the elements extending between said stop means (48) at one end of the housing and said movable actuating member (40) at the other end of the housing with each row of elements being in contact with the other row and with the centers of all the elements being spaced apart along the housing; roller means (22) having a fixed axis of rotation and positioned in contact with, and extending along the length of, said first row (32) of elements; means (42) for urging said actuating member (40) into engagement with the end element (30-1) at said other end of said housing whereby the end element (30-2) at said one end of said housing is urged against said stop means; means (20, 24) for feeding documents (54) along said feed path between said roller means (22) and said first row (32) of elements in a direction transverse to the axis of said roller means whereby there is brought about a movement of said actuating member (40) away from said stop means (48); and means (52) for detecting a movement of said actuating member away from said stop means in excess of a predetermined amount.

2. An apparatus according to claim 1, characterized in that said elements (30) are balls.

3. An apparatus according to claim 2, characterized in that said actuating member (40) is urged against the ball (30-1) at one end of said second 3. (concluded) row (34), the ball (30-2) at the other end of said second row being urged against said stop means (48).

4. An apparatus according to claim 3, characterized in that each ball of said first row (32) is in contact with two adjacent balls of said second row (34), the number of balls in said second row being one greater than the number of balls in said first row.

5. An apparatus according to claim 2, characterized in that there is a gap between each adjacent pair of balls (30) in each row.

6. An apparatus according to claim 2, characterized in that all the balls (30) are of substantially the same size.

7. An apparatus according to claim 6, characterized in that each of the balls (30) is a sliding fit between opposite walls of said housing (12).

8. An apparatus according to any one of the preceding claims, characterized in that said means for detecting is an electrical switch (S2).

9. An apparatus according to any one of claims 1 to 7, characterized in that said means for detecting includes a transducer (90) arranged to produce an analog output signal dependent on the extent of movement of said actuating member (40) away from said stop means (48).

**Patentansprüche**

Einrichtung zum Feststellen des Durchlaufs von mehrfach überlagerten Dokumenten (54) längs eines Förderwegs, gekennzeichnet mit einem länglichen Gehäuse (12); einer Anschlagsvorrichtung (48) an einem Ende des Gehäuses; einem bewegbaren Betätigungsglied (40) am anderen Ende des Gehäuses; erste (32) und zweite (34) überlagerte Reihen von im wesentlichen nicht zusammendrückbaren Elementen (30), die in dem länglichen Gehäuse (12) gehalten sind, wobei sich die Elemente zwischen der Anschlagsvorrichtung (48) an dem einen Ende des Gehäuses und dem bewegbaren Betätigungsglied (40) am anderen Ende des Gehäuses erstrecken, wobei jede Reihe von Elementen in Kontakt mit der anderen Reihe ist und die Mittelpunkte aller Elemente längs des Gehäuses voneinander beabstandet sind; einer Rollenvorrichtung (22), die eine feste Drehachse besitzt, und in Kontakt mit der ersten Reihe (32) von Elementen angeordnet ist und sich längs der Längserstreckung derselben erstreckt; einer Vorrichtung (42) zum Drücken des Betätigungsgliedes (40) in Eingriff mit dem Endelement (30-1) an dem anderen Ende des Gehäuses, wodurch das Endelement. (30-2) an dem einen Ende des Gehäuses gegen die Anschlagvorrichtung gedrückt wird; Vorrichtungen (20, 24) zum Fördern von Dokumenten (54) längs des Förderweges zwischen der Rollenvorrichtung (22) und der ersten Reihe (32) von Elementen in einer Richtung quer zur Achse der Rollenvorrichtung wodurch eine Bewegung des Betätigungsgliedes weg von der Anschlagvorrichtung (48) zustandegebracht wird; und einer Vorrichtung (52) zum Feststellen einer Bewegung des Betätigungsgliedes weg von der Anschlagvorrichtung über ein vorbestimmtes Maß hinaus.

2. Einrichtung nach Anspruch 1, dadurch gekennzeichnet, daß die Elemente (30) Kugeln sind.

3. Einrichtung nach Anspruch 2, dadurch gekennzeichnet, daß das Betätigungsglied (40) gegen die Kugel (30-1) an dem einen Ende der zweiten Reihe (34) gedrückt wird, wobei die Kugel (30-2) am anderen Ende der zweiten Reihe gegen die Anschlagsvorrichtung (48) gedrückt wird.

4. Einrichtung nach Anspruch 3, dadurch gekennzeichnet, daß jede Kugel der ersten Reihe (32) in Kontakt mit zwei benachbarten Kugeln der zweiten Reihe (34) ist, wobei die Anzahl der Kugeln in der zweiten Reihe um eine größer als die Anzahl der Kugeln in der ersten Reihe ist.

5. Einrichtung nach Anspruch 2, dadurch gekennzeichnet, daß eine Lücke zwischen benachbarten Paaren von Kugeln (30) in jeder Reihe vorhanden ist.

6. Einrichtung nach Anspruch 2, dadurch gekennzeichnet, daß alle Kugeln (30) von im wesentlichen der gleichen Größe sind.

7. Einrichtung nach Anspruch 6, dadurch gekennzeichnet, daß jede der Kugeln (30) in Gleitsitz zwischen gegenüberliegenden Wänden des Gehäuses (12) ist.

8. Einrichtung nach einem der vorhergehenden Ansprüche, dadurch gekennzeichnet, daß die Vorrichtung zum Feststellen ein elektrischer Schalter (52) ist.

9. Einrichtung nach einem der Ansprüche 1 bis 7, dadurch gekennzeichnet, daß die Vorrichtung zum Feststellen einen kandler (90) aufweist, der angeordnet ist, um ein analoges Ausgangssignal abhängig von dem Ausmaß der Bewegung des Betätigungsgliedes (40) weg von der Anschlagvorrichtung (48) zu erzeugen.

## Revendications

1. Appareil pour détecter le passage de documents multiples superposés (54) le long d'un trajet d'alimentation, comprenant par un corps allongé (12); des moyens (48) d'arrêt à une première extrémité du corps; un élément mobile (40) d'actionnement à l'autre extrémité du corps; des première (32) et seconde (34) rangées superposées d'éléments sensiblement non compressibles (30) retenus dans ledit corps allongé (12), les éléments s'étendant entre lesdits moyens d'arret (48) à la première extrémité du corps et ledit élément mobile (40) d'actionnement à l'autre extrémité du corps, les deux rangées d'éléments étant en contact l'une avec l'autre et les centres de tous les éléments étant espacés le long du corps; un moyen à rouleau (22) ayant un axe fixe de rotation et positionné en contact avec, et s'étendant sur la longueur de, ladite première rangée (32) d'éléments; des moyens (42) destinés à solliciter ledit élément (40) d'actionnement pour le faire porter contre l'élément extrême (30-1) situé à ladite autre extrémité dudit corps afin que l'élément extrême (30-2) situé à ladite première extrémité dudit corps soit sollicité contre lesdits moyens d'arrêt; des moyens (20, 24) destinés à faire avancer les documents (54) le long dudit trajet d'alimentation entre ledit moyen à rouleau (22) et ladite première rangée (32) d'éléments, dans une direction transversale 3 l'axe dudit moyen à rouleau de façon qu'il se produise un mouvement dudit élément (40) d'actionnement s'éloignant desdits moyens d'arrêt (48); et des moyens (52) destinés à détecter un mouvement dudit élément d'actionnement s'éloignant desdits moyens d'arrêt au-delà d'une valeur préterminée.

2. Appareil selon la revendication 1, caractérisé en ce que lesdits éléments (30) sont des boules.

3. Appareil selon la revendication 2, caractérisé en ce que ledit élément (40) d'actionnement est sollicité contre la boule (30-1) située à une première extrémité de ladite seconde rangée (34), la boule (30-2) située à l'autre extrémité de ladite seconde rangée étant sollicitée contre lesdits moyens d'arrêt (48).

4. Appareil selon la revendication 3, caractérisé en ce que chaque boule de ladite première rangée (32) est en contact avec deux boules adjacentes de ladite seconde rangée (34), le nombre de boules de ladite seconde rangée étant supérieur d'une unité au nombre de boules de ladite première rangée.

5. Appareil selon la revendication 2, caractérisé en ce qu'il existe un intervalle entre les boules adjacentes (30) de chaque rangée.

6. Appareil selon la revendication 2, caractérisé en ce que toutes les boules (30) sont sensiblement de la même dimension.

7. Appareil selon la revendication 6, caractérisé en ce que chacune des boules (30) est en ajustement glissant entre des parois opposées dudit corps (12).

8. Appareil selon l'une quelconque des revendications précédentes, caractérisé en ce que lesdits moyens de détection comprennent un interrupteur électrique (52).

9. Appareil selon l'une quelconque des revendications 1 à 7, caractérisé en ce que lesdits moyens de détection comprennent un transducteur (90) agencé afin de produire un signal analogique de sortie dépendant de l'amplitude du mouvement dudit élément (40) d'actionnement s'éloignant desdits moyens d'arrêt (48).

FIG. 1

FIG. 2

FIG. 3

0 098 290

## FIG. 4 A

## FIG. 4 B

## FIG. 4 C

## FIG. 4 D

# FIG. 5